# EUROPÄISCHE PATENTANMELDUNG

(11) **EP 1 211 447 A2**
(43) Veröffentlichungstag der Anmeldung: **05.06.2002**
(21) Anmeldenummer: 01122813.7
(22) Anmeldetag: 22.09.2001
(51) Int. Cl.: F16K 17/12

(54) **Sicherheitsventil**

(30) Priorität: 04.12.2000 DE 10060311
(71) Anmelder: ITT Richter Chemie-Technik GmbH, D-47906 Kempen (DE)
(72) Erfinder: Sett, Manfred, 47906 Kempen (DE)
(74) Vertreter: COHAUSZ HANNIG DAWIDOWICZ & PARTNER

(57) **Zusammenfassung**

Die Erfindung betrifft ein Sicherheitsventil insbesondere für niedrige Drücke und aggressive Medien mit einem Einlass (3), der oben in einem Ventilsitz (4) endet, auf dem abdichtend ein gewichtsbelasteter Dichtkörper liegt (5). Ein bestimmter Überdruck unterhalb des Ventilsitzes und/oder ein bestimmter Unterdruck über dem Ventilsitz führt zu einem Anheben des Dichtkörpers (5). Der Dichtkörper bildet an seiner Oberseite einen nach oben senkrecht vorstehenden Schaft (6), der an oder in einem senkrechten am Ventilgehäuse festen Teil (8) geführt ist. An oder auf dem Schaft (6) sind zwei oder mehr Gewichte (9) insbesondere lösbar befestigt.

## Beschreibung

Die Erfindung betrifft ein Sicherheitsventil insbesondere für niedrige Drücke und aggressive Medien mit einem Einlass, der oben in einem Ventilsitz endet, auf dem abdichtend ein gewichtsbelasteter Dichtkörper liegt, wobei ein bestimmter Überdruck unterhalb des Ventilsitzes und/oder ein bestimmter Unterdruck über dem Ventilsitz zu einem Anheben des Dichtkörpers führt.

Niederdruck Sicherheitsventile werden zur Druckabsicherung von Drucksystemen, zum Beispiel Behälter, Kessel, Rohrleitungen, gegen Überdruck oder Vakuum eingesetzt. Diese niedrigen Drücke sind in einer Größenordnung < 200 mbar. Da die Druckabsicherung bei hochaggressiven und umweltkritischen Medien eine hermetische Abdichtung des Ventils zur Atmosphäre erfordert, werden solche Niederdruckventile üblicherweise so ausgeführt, dass das den Dichtkörper insbesondere den Ventilkegel kraftbeaufschlagende Bauteil, zum Beispiel eine Feder oder ein Gewicht direkt im produktberührten Raum des Ventilkörpers plaziert ist. Dadurch vermeidet man Spindeldurchführungen zur Atmosphäre, die mit Dichtelementen wie zum Beispiel Faltenbalg oder Membrane abgedichtet werden müssen. Die bei hochaggressiven Medien beständigen Werkstoffe, zum Beispiel Hastelloy, PTFE etc. führen zu Faltenbälgen/Membranen, deren Betätigungskraft infolge Federsteifigkeit so groß ist, dass diese der im Niederdruckbereich wirksamen Ventilöffnungs- bzw. Schließkraft entgegenwirkt und die Ventilfunktion stört.

Es ist ein gewichtsbelastetes Niederdruck Sicherheitsventil bekannt, bei dem der Ventilkegel einen zylindrischen Schaft aufweist, der in einer in der Ventilhaube angeordneten Bohrung geführt ist. Bedingt durch das erforderliche Lagerspiel und den relativ großen Abstand der Lagerung von der Abdichtfläche des Sitz/Kegel Absperrelementes kommt es zu einer Außermittigkeit der Ventilkegelachse relativ zur Ventilsitzachse. Diese schlechte Zentrierung führt zu einer ungleichmäßigen Kräfteverteilung am Ventilkegel und daher zu einseitigem Ankippen beim Öffnen des Ventils. Die Folge sind Undichtheiten bereits bevor der Ansprechdruck erreicht ist und ein Klemmen der Führung infolge Verkantung.

Eine andere Ventilkonstruktion verwendet einen Ventilkegel mit Führungsstegen, der in die Ventilsitzbohrung eingesteckt ist. Diese Konstruktion hat den Nachteil eine Verengung des Ventilsitzquerschnittes durch die Führungsstege und somit einer Verminderung der Ventilleistung. Auch führt der hochliegende Schwerpunkt des über dem Ventilkegel angeordneten Gewichtes zu einer Verkantung bzw. Klemmen des Ventilkegels beim Öffnen. Das den Ventilkegel belastende Gewicht ist konstruktiv auf einen definierten Ventil-Ansprechdruck abgestimmt. Eine nachträgliche Veränderung erfordert den Austausch oder die Nacharbeit des Gewichtes. Das Gewicht ist entweder aus Metall oder aus Kunststoff gefertigt. Beim Einsatz für hochaggressive Medien sind metallische Gewichte aus Sonderwerkstoffen, zum Bespiel Hastelloy, Tantal, Zirkonium etc. notwendig, die entsprechend kostspielig sind. Werden Gewichte aus beständigen Kunststoffen zum Beispiel PTFE eingesetzt, so führt dies aufgrund der niedrigen Dichte des Kunststoffes im Vergleich zum Metall zu großvolumigen Gewichten und daher großvolumigen Ventilgehäusen.

Aufgabe der Erfindung ist es, ein Sicherheitsventil der eingangs genannten Art so zu verbessern, dass es bei hoher Dichtigkeit eine große Leichtgängigkeit in allen Arbeitszuständen aufweist. Ferner ist es Aufgabe der Erfindung das den Dichtkörper belastenden Gesamtgewicht einfach und leicht einzustellen und zu verändern.

Diese Aufgaben werden erfindungsgemäß dadurch gelöst, dass der Dichtkörper an seiner Oberseite einen nach oben senkrecht vorstehenden Schaft bildet, der an oder in einem senkrechten am Ventilgehäuse festen Teil geführt ist, und dass an oder auf dem Schaft zwei oder mehr Gewichte insbesondere lösbar befestigt sind.

Der Schaft des Dichtkörpers ist so sicher geführt, dass eine große Leichtgängigkeit erreicht wird. Auch kann das Gewicht des Dichtkörpers durch Anzahl und Wahl des Gewichtes der einzelnen Gewichte sehr exakt bestimmt werden.

Vorzugsweise wird vorgeschlagen, dass der nach oben vorstehende Schaft eine senkrechte, nach oben offene Innenbohrung aufweist, in der eine Stange einliegt, die am Ventilgehäuse fest ist. Auch ist von Vorteil, wenn die Stange von einem gegenüber aggressiven Medien beständigen Material ummantelt ist.

Eine einfache Herstellung und Montage wird erreicht, wenn auf dem Schaft ringförmige Gewichte übereinander liegen, die den Schaft umgeben. Auch ist von Vorteil, wenn die Gewichte von einem gegenüber aggressiven Medien beständigen Material ummantelt sind oder hieraus bestehen.

Ein sicherer Halt der Gewichte ist gegeben, wenn über den Gewichten eine Scheibe insbesondere aus einem gegenüber aggressiven Medien beständigen Material liegt, die durch eine Rundschnur oder einen Sprengring am Schaft gesichert ist.

Eine exakte Fixierung der Gewichte und insbesondere der Ringscheibe wird unabhängig von der Anzahl der Gewichte erreicht, wenn die Außenseite des Schaftes mehrere Ringnuten in den Gewichtshöhen entsprechenden Abständen aufweist.

Die Leichtgängigkeit des Dichtkörpers wird verbessert, wenn die Führungsstange nur mit zwei ringförmigen Vorsprüngen in der Innenbohrung des Schaftes anliegt. Ferner ist von Vorteil, wenn die innere Ausnehmung des Schaftes über mindestens eine Entlüftungsbohrung mit dem Ventilinnenraum verbunden ist.

Damit nach dem Öffnen des Dichtkörpers dieser nicht sofort wieder schließt, wird vorgeschlagen, dass der Dichtkörper an seiner Unterseite eine Ausnehmung insbesondere einen konkaven konischen Rand außerhalb des Ventilsitzes aufweist. Hierdurch wird der Dichtkörper eine Zeit lang von dem aus dem Auslass austretenden Gas oder Flüssigkeit getragen.

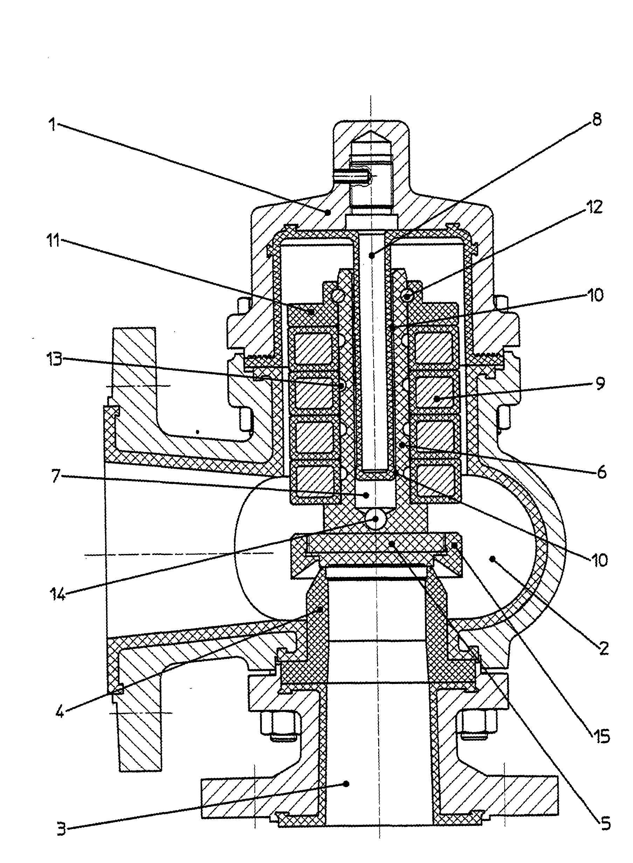

Ein Ausführungsbeispiel der Erfindung ist in der Zeichnung in einem axialen Schnitt dargestellt und wird im folgenden näher beschrieben.

Das Niederdruck Sicherheitsventil besitzt ein Ventilgehäuse 1, das aus mehreren Teilen zusammengeschraubt ist und dessen Innenraum 2 an den Innenwänden mit einem gegenüber aggressiven medienbeständigen Kunststoff ausgekleidet bzw. beschichtet ist. Dieser Kunststoff ist vorzugsweise PTFE, PFA, oder FEP. In dem Innenraum 2 reicht von unten ein senkrechter, mit demselben Kunststoffmaterial ausgekleideter zylindrischer oder konischer Einlass 3, der oben in einem ringförmigen Ventilsitz 4 endet. Auf dem Ventilsitz liegt ein Dichtkörper 5 aus einem gleichen oder ähnlichen Kunststoffmaterial auf, der bei Auflage den Ventilsitz 4 abdichtend schließt.

Das Kunststoffmaterial des Dichtkörpers 5 bildet einen angeformten, nach oben senkrecht ragenden zylindrischen Schaft 6 mit einer koaxialen senkrechten Innenbohrung 7, in der eine Führungsstange als Führungsteil 8 einliegt. Die Führungsstange ist an der Oberseite des Ventilgehäuses 1 unbeweglich befestigt.

Das senkrechte Führungsteil 8 ist von dem obengenannten beständigen Kunststoff ummantelt, so dass der Durchmesser des Führungsteils nur wenig geringer ist als der Innendurchmesser der Innenbohrung 7. Hierbei bildet der Kunststoff der Mantelfläche des Führungsteils 8 zwei Ringvorsprünge 10, so dass das Führungsteil 8 nur zwei Führungsbereiche besitzt, mit dem es in der Innenbohrung 7 einliegt. Hierdurch wird eine hohe Leichtgängigkeit der senkrechten Bewegungen des Dichtkörpers 5 erreicht.

Auf der zylindrischen Außenseite des Schaftes 6 liegen vier ringförmige Gewichte 9, die jeweils mit dem obengenannten Kunststoff ummantelt sind und von oben auf dem Schaft 6 aufgeschoben werden. Auf dem obersten Ringgewicht 9 liegt eine Ringscheibe 11 aus dem obengenannten Kunststoff, die durch eine Rungschnur 12 gesichert ist, die im Ausführungsbeispiel in einer obersten Ringnut 13 einliegt.

Der Schaft 6 besitzt an seiner Außenseite mehrere Ringnuten 13 in regelmäßigen Abständen, wobei die Abstände der Ringnuten zueinander der Höhe der Ringgewichte 9 entspricht, so dass die Ringscheibe 11 durch die Rundschnur 12 in der jeweils der Anzahl der Gewichte 9 entsprechenden Höhe am Schaft 6 sicher befestigbar ist.

Am unteren Ende der Inennbohrung 7 ist eine waagerechte Entlüftungsbohrung 14 angeordnet, die die Innenbohrung mit dem Innenraum 2 verbindet.

Am äußeren Rand des Dichtkörpers 5 ist ein Ring 15 aus dem obengenannten Kunststoffmaterial befestigt, dessen Unterseite nach innen hin konisch aufsteigt, so dass der Ring 15 dem Dichtkörper 5 eine Glockenform gibt, so dass der Dichtkörper als Hubglocke im geöffneten Zustand dafür sorgt, dass der Flüssigkeits- oder Gasstrom das Ventil offen hält.

Somit erfolgt die Führung des Dichtkörpers bzw. des Ventilkegels auf einer mit der Haube und somit dem Gehäuse des Ventils fest verbundenen Führungs-bzw. Ventilstange 8. Die Stange 8 macht keinen Hub, sondern ist ein statisches Bauteil, welches in der oberen Haube des Gehäuses fliegend gelagert und zentriert ist. Die Stange 8 ist vorzugsweise aus Metall gefertigt. Der VentilInnenraum 2 inklusive der Ventilstange 8 sind mit einer bei aggressiven Medien beständigen Kunststoffauskleidung beschichtet, zum Beispiel PTFE, PFA, FEP etc.

Der Schaft 6 des Dichtkörpers ist hohlgebohrt. In dieser Bohrung wird der Dichtkörper auf der Ventilstange geführt. Dadurch wird erreicht, dass die Lagerung des Ventilkegels im Gehäuse möglichst nahe an die Dichtflächen des Dichtkörpers des Ventilsitzes gelegt wird, so dass Dichtkörper und Ventilsitz optimal zentriert werden. Dadurch wird ein präzises Ansprechverhalten beim Öffnen und eine gute Dichtheit beim Schließen erreicht. Auch wird das Belastungsgewicht auf seiner gesamten Länge geführt, so dass es zu keinem Verkanten kommen kann.

Die Gewichte sind mit Kunststoff ummantelte, metallische Ringe. Das Metall führt aufgrund seiner im Vergleich zum Kunststoff relativ hohen Dichte zu kleinvolumigen Gewicht-Abmessungen, so dass auch die Ventilbaumaße relativ klein gehalten werden können. Die Ummantelung mit Kunststoff sorgt für die chemische Beständigkeit bei aggressiven Medien und ermöglichst die Verwendung eines kostengünstigen Metallkerns, da auf beständige, metallische Sonderlegierungen verzichtet werden kann.

Das Gewicht besteht aus mehreren vorzugsweise vier Ringen, die aufeinander gelegt sind. Dadurch kann der Ansprechdruck des Ventils verändert werden, indem ein oder mehrere Gewichte ergänzt oder weggenommen werden. Dadurch wird insbesondere die nachträgliche Anpassung von im Einsatz befindlichen Ventilen erleichtert.

## Patentansprüche

1. Sicherheitsventil insbesondere für niedrige Drücke und aggressive Medien mit einem Einlass (3), der oben in einem Ventilsitz (4) endet, auf dem abdichtend ein gewichtsbelasteter Dichtkörper (5) liegt, wobei ein bestimmter Überdruck unterhalb des Ventilsitzes und/oder ein bestimmter Unterdruck über dem Ventilsitz zu einem Anheben des Dichtkörpers führt, **dadurch gekennzeichnet, dass** der Dichtkörper (5) an seiner Oberseite einen nach oben senkrecht vorstehenden Schaft (6) bildet, der an oder in einem senkrechten am Ventilgehäuse festen Teil (8) geführt ist, und dass an oder auf dem Schaft (6) zwei oder mehr Gewichte (9) insbesondere lösbar befestigt sind.

2. Ventil nach Anspruch 1, **dadurch gekennzeichnet, dass** der nach oben vorstehende Schaft (6) eine senkrechte, nach oben offene Innenbohrung (7) aufweist, in der eine Stange (8) einliegt, die am Ventilgehäuse (1) fest ist.

3. Ventil nach Anspruch 1 oder 2, **dadurch gekennzeichnet, dass** die Stange (8) von einem gegenüber aggressiven Medien beständigen Material ummantelt ist.

4. Ventil nach einem der vorherigen Ansprüche, **dadurch gekennzeichnet, dass** auf dem Schaft (6) ringförmige Gewichte (9) übereinander liegen, die den Schaft (6) umgeben.

5. Ventil nach einem der vorherigen Ansprüche, **dadurch gekennzeichnet, dass** die Gewichte (9) von einem gegenüber aggressiven Medien beständigen Material ummantelt sind oder hieraus bestehen.

6. Ventil nach einem der vorherigen Ansprüche, **dadurch gekennzeichnet, dass** über den Gewichten (9) eine Scheibe (11) insbesondere aus einem gegenüber aggressiven Medien beständigen Material liegt, die durch eine Rundschnur (12) oder einen Sprengring am Schaft (6) gesichert ist.

7. Ventil nach Anspruch 6, **dadurch gekennzeichnet, dass** die Außenseite des Schaftes (6) mehrere Ringnuten (13) in den Gewichtshöhen entsprechenden Abständen aufweist.

8. Ventil nach einem der vorherigen Ansprüche, **dadurch gekennzeichnet, dass** die Führungsstange (8) nur mit zwei ringförmigen Vorsprüngen (10) in der Innenbohrung des Schaftes anliegt.

9. Ventil nach einem der vorherigen Ansprüche, **dadurch gekennzeichnet, dass** die innere Ausnehmung (7) des Schaftes über mindestens eine Entlüftungsbohrung (14) mit dem Ventilinnenraum (2) verbunden ist.

10. Ventil nach einem der vorherigen Ansprüche, **dadurch gekennzeichnet, dass** der Dichtkörper (5) an seiner Unterseite eine Ausnehmung insbesondere einen konvaren konischen Rand (15) außerhalb des Ventilsitzes aufweist.
